Europäisches Patentamt

European Patent Office

Office européen des brevets

(11) Numéro de publication: **0 094 269**
**B1**

(12) **FASCICULE DE BREVET EUROPEEN**

(45) Date de publication du fascicule du brevet:
**19.02.86**

(21) Numéro de dépôt: **83400741.1**

(22) Date de dépôt: **14.04.83**

(51) Int. Cl.⁴: **H 01 S 3/113,** H 01 S 3/02,
**G 01 N 21/75**

(54) **Dispositif propre à la mise en oeuvre d'une solution dégradable d'un quelconque produit, par exemple d'un absorbant saturable, en particulier pour laser.**

(30) Priorité: **22.04.82 FR 8206937**

(43) Date de publication de la demande:
**16.11.83 Bulletin 83/46**

(45) Mention de la délivrance du brevet:
**19.02.86 Bulletin 86/8**

(84) Etats contractants désignés:
**AT BE CH DE FR GB IT LI LU NL SE**

(56) Documents cités:
**DE - A - 2 011 322**
**FR - A - 427 128**
**US - A - 2 978 951**
**US - A - 3 746 864**
**US - A - 4 364 015**

**JOURNAL OF PHYSICS D, APPLIED PHYSICS, vol. 7, no. 10, 1er juillet 1974, pages 1361-1368, Letchworth, Hertfordshire, G.B. H. BRINKSCHULTE et al.: "A repetitively pulsed, Q-switched inorganic liquid laser".**

(73) Titulaire: **SYNTHELABO, 58, rue de la Glacière, F-75621 Paris Cedex 13 (FR)**

(72) Inventeur: **Tagnon, Luc, 11 Rue Brière de Boismont, F-94160 Saint-Mande (FR)**
Inventeur: **Wajs, Georges, 67 Avenue Daniel Casanova, F-94200 Ivry (FR)**

(74) Mandataire: **CABINET BONNET-THIRION, 95 Boulevard Beaumarchais, F-75003 Paris (FR)**

ACTORUM AG

## Description

La présente invention concerne d'une manière générale la mise en oeuvre d'une solution dégradable d'un quelconque produit, et vise plus particulièrement mais non nécessairement exclusivement, la mise en oeuvre, dans un laser, d'un absorbant saturable, en vue d'un fonctionnement en mode bloqué d'un tel laser.

Pour certaines applications, et c'est le cas dans les appareils de chirurgie ophtalmologique à laser, il est souhaitable, voire même nécessaire, que les impulsions du faisceau laser utile soient ultra-brèves, de l'ordre au maximum de quelques dizaines de picosecondes, pour que la puissance du flux lumineux véhiculé par un tel faisceau laser soit suffisante pour assurer l'obtention des effets recherchés.

Ainsi qu'on le sait, et sans qu'il soit besoin ici de donner plus de détail à ce sujet, le faisceau laser émis est, à cet effet, soumis, dans une cavité appropriée, au contrôle d'un dispositif de commande, communément dit «Q switch», propre à ne lui permettre d'émerger de ladite cavité qu'au cours d'impulsions ayant la durée très brève recherchée.

A titre de dispositif de commande, il est connu de mettre en oeuvre, dans une telle cavité, en pratique, formée par une cuve, une solution d'un absorbant saturable propre à changer brutalement, et de manière réversible, de composition chimique, et donc de caractéristiques phisiques, sous les effets d'un tel faisceau laser.

En pratique, un tel absorbant saturable, d'abord opaque au rayonnement laser, devient brutalement transparent à celui-ci, et réciproquement.

Le produit, communément dit «DYE», et utilisable en pratique lorsqu'il est en solution dans du chlorobenzène, donne à cet égard satisfaction.

Malheureusement, en service, un tel produit s'avère dégradable, en ce sens que, sous les effets, notamment, du rayonnement lumineux et notamment de la composante ultraviolette de celui-ci, d'une part, et de l'oxygène de l'air ambiant, d'autre part, il perd progressivement de son efficacité.

Il en résulte que, de manière incontrôlée, le fonctionnement d'un laser ainsi équipé d'une cuve à DYE évolue progressivement du mode bloqué au mode relaxé, au détriment, au moins pour certaines applications, des effets recherchés.

Pour pallier, au moins dans une certaine mesure, cet inconvénient, et prenant en considération le fait que, en pratique, seule une zone limitée de la cuve à DYE, dite ci-après par comodité zone active, est effectivement intéressée par le faisceau laser à traiter, il a déjà été proposé d'insérer une telle cuve à DYE sur un circuit de circulation comportant en série avec elle une pompe propre à l'entraînement de la solution concernée, pour un renouvellement continu de la portion de celle-ci présente dans ladite zone active de cette cuve à DYE.

Mais, lorsque la totalité de la solution présente dans le circuit de circulation est dégradée en dessous d'un certain seuil, il faut procéder au renouvellement de l'ensemble de cette solution.

Il s'agit d'une opération relativement longue et délicate, qui, pendant le temps nécessaire pour la mener à bien, rend inutilisable le laser concerné, et qui, sans contrôle particulier, risque de toute façon d'être effectuée de manière tardive.

Il est connu par ailleurs, notamment par les brevets US-A-2 978 951 et FR-A-427 128, un dispositif selon la préambule de la revendication 1 dans sa forme générale s'agissant plus précisément d'une solution d'un ou plusieurs colorants, et non pas d'une solution dégradable semblable à celle concernée par la présente demande, de prévoir, branché sur un circuit d'utilisation d'un telle solution, ou circuit de circulation, au moins un flacon contenant l'un au moins des colorants en cause, pour permettre, à la demande, sous la commande de moyen de vannage, l'injection, dans ledit circuit de circulation, d'une quantité déterminée de ce colorant, et ainsi obtenir un réajustement de ladite solution.

Un tel réajustement, s'il convient à des colorants, ne convient pas nécessairement à une solution dégradable semblable à celle concernée par la présente demande, notamment dans le cas où les produits de dégradation formés dans l'intervalle ne peuvent pas subsister sans inconvénient dans leur intégralité dans le circuit de circulation, et/ou dans le cas où la quantité de solution en circulation dans celui-ci est déterminée.

La presente invention a d'une manière générale pour objet une disposition permettant de surmonter cette difficulté et conduisant en outre à d'autres avantages.

De manière plus précise, elle a pour objet un dispositif propre à la mise en oeuvre d'une solution dégradable d'un quelconque produit, par exemple d'un absorbant saturable, en particulier pour laser, du genre comportant, d'une part un premier circuit, dit ici par commodité circuit de circulation, sur lequel se trouvent notamment en série une cuve, propre à contenir ladite solution, et une pompe, propre à l'entraînement de celle-ci, et, d'autre part, branché en un point dudit circuit de circulation, un deuxième circuit qui est propre à permettre, sous la commande de moyens de vannage, l'injection, dans le circuit de circulation, d'une solution dudit produit, dite ici par commodité solution mère, de concentration supérieure à celle de la solution présente dans ledit circuit de circulation, dite ici par commodité solution fille, et qui comporte à cet effet un flacon, ou flacon principal, propre à contenir de ladite solution mère et susceptible d'être relié audit circuit de circulation sous la commande desdits moyens de vannage, ce dispositif étant caractérisé en ce que le deuxième circuit comporte un deuxième flacon, ou flacon auxiliaire, formant vase d'expansion ou vase de recueil, et relié lui-même au circuit de circulation.

Ainsi, il est avantageusement possible, chaque fois que cela s'avère nécessaire, d'introduire dans le circuit de circulation une charge supplémentaire d'atomes d'absorbant saturable non dégradé de la solution mère, et, par là, en maintenant la solution fille présente dans le circuit de circulation à une concentration satisfaisante en un tel absorbant, de prolonger d'autant la durée de service de cette solution avant son renouvellement global, tout en retirant dudit circuit de circulation, par le flacon auxiliaire prévu à cet effet, une quantité de solution fille suffisant à une telle prolongation de service de celle-ci.

De cette point de vue, le circuit comportant suivant l'invention un tel flacon auxiliaire constitue un réel circuit de régénération pour la solution dégradable en cause.

De préférence, il est inséré sur le circuit de circulation un réservoir tampon formant capacité de mélange, qui est de volume supérieur à celui dudit circuit de circulation, et par exemple de volume au moins double de celui de ce dernier.

Un tel réservoir tampon permet en effet avantageusement d'exécuter dans un temps acceptable, largement inférieur par exemple à la demi-heure, le mélange de la solution fille présente dans le circuit de circulation et de la solution mère injectée dans ce dernier lors d'une intervention du circuite de régénération.

De préférence, également, suivant un mode particulier de réalisation de l'invention, il est inséré sur le circuit de circulation un spectrophotomètre, pour le contrôle de la solution fille présente dans ledit circuit de circulation.

Il s'avère en effet que, s'agissant d'une solution d'absorbant saturable du type de celle mentionnée ci-dessus, la spectroscopie d'une telle solution permet avantageusement de rendre compte de façon biunivoque de son taux de dégradation, et, partant, de son degré d'efficacité à l'égard des effets recherchés.

En fonction des observations faites à l'aide d'un tel spectrophotométre, les moyens de vannage contrôlant l'intervention du circuit de régénération peuvent par exemple, être commandés manuellement.

Mais, ils peuvent également être commandés automatiquement, sous le contrôle par exemple d'une unité de gestion à microprocesseur.

La présente invention se prête en effet avantageusement à des très divers modes de réalisation, aussi bien en ce qui concerne la mise en oeuvre de ces moyens de vannage, qu'en ce qui concerne l'intervention proprement dite du circuit de régénération.

En outre, dans tous les cas, et grâce notamment au flacon auxiliaire mis en oeuvre, le remplissage du circuit de circulation du dispositif suivant l'invention, nécessaire à sa mise en route initiale, aussi bien qu'à chaque changement de son flacon principal, se trouve facilité.

Les caractéristiques et avantages d'un mode de réalisation de l'invention ressortiront d'ailleurs de la description qui va suivre, à titre d'exemple, en référence aux dessins schématiques annexés sur lesquels:

la fig. 1 est un bloc diagramme d'un dispositif suivant l'invention;

la fig. 2 est, à échelle supérieure, une vue en coupe axiale de la cuve que comporte un tel dispositif;

la fig. 3 est une vue analogue à celle de la fig. 1 et concerne un autre mode de mise en oeuvre de l'invention;

la fig. 4 est également une vue analogue à celle de la fig. 1 et concerne le même mode de mise en oeuvre que celle-ci, suivant une variante pratique d'exécution.

Tel qu'illustré sur ces figures, le dispositif suivant l'invention, qui est destiné à la mise en oeuvre d'une solution dégradable d'un quelconque produit dans une quelconque installation, et plus particulièrement à la mise en oeuvre d'un absorbant saturable dans un laser, est du genre comportant un premier circuit 10, dit ici par commodité circuit de circulation, sur lequel se trouvent en série, de manière connue en soi, une cuve 11, propre à contenir ladite solution, une pompe 12, propre à l'entraînement de celle-ci, et, dans la forme de réalisation représentée, un filtre 13 propre à retenir d'éventuels débris solides, et, notamment, ceux d'éventuels précipités.

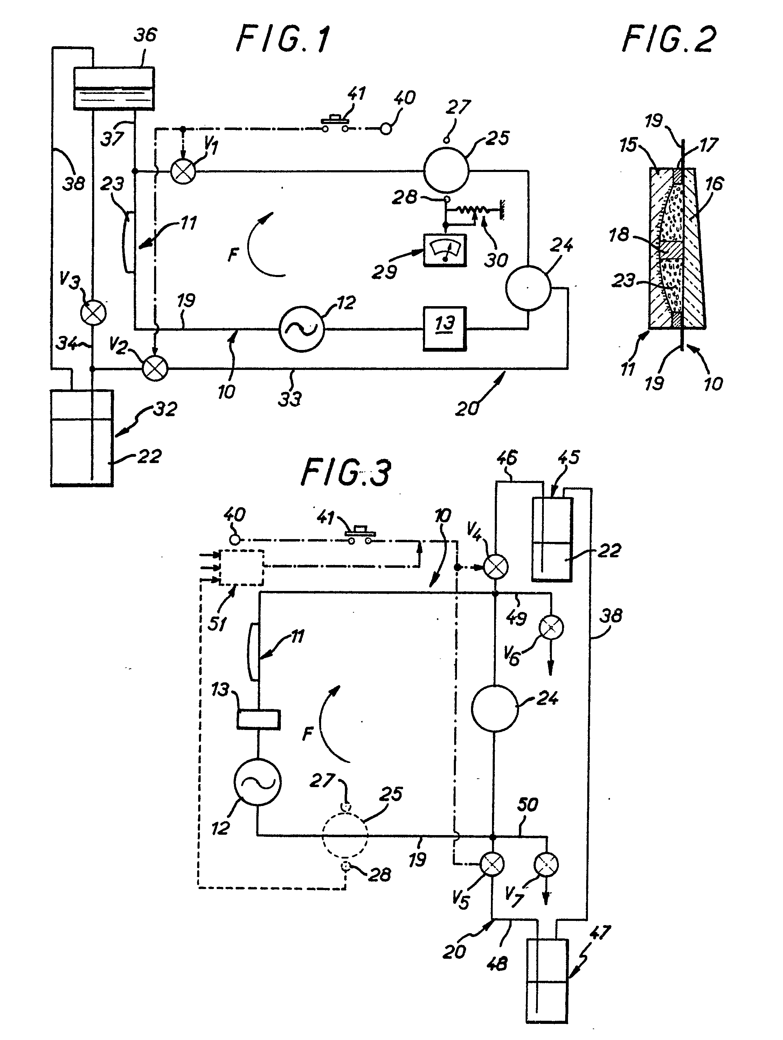

S'agissant d'une solution d'absorbant saturable pour laser du type de celle mentionnée ci-dessus, la cuve 11 forme, tel qu'illustré à la fig. 2, une cavité propre à la mise en oeuvre d'une telle solution dans un tel laser.

Cette cuve 11 est en effet formée par un miroir concave 15, qui délimite à l'arrière la cavité correspondante, et un hublot 16 à face d'entrée légèrement oblique, qui ferme à l'avant ladite cavité, en coopération avec un joint d'étanchéité périphérique 17.

En pratique, seule la zone centrale 18 de la cavité ainsi formée par la cuve 11 est effectivement intéressée par le faisceau laser à traiter.

Sur la fig. 2, cette zone 18, ou zone active, a été matérialisée par des hachures.

Corollairement, la pompe 12 est quelconque, et le filtre 13 également, ce filtre 13 pouvant par exemple être en verre fritté.

Les divers composants du circuit de circulation 10 ainsi constitués sont reliés deux à deux, en boucle fermée, par une canalisation dont on désignera ci-après indifféremment par la même référence 19 les divers tronçons successifs.

Le dispositif suivant l'invention comporte en outre, branché en un point d'un tel circuit de circulation 10, un deuxième circuit 20, dit ici circuit de régénération, propre à permettre, sous la commande de moyens de vannage détaillés ci-après, l'injection, dans ledit circuit de circulation 10, d'une solution 22, dite ici par commodité solution mère, de concentration supérieure à celle de la solution 23 présente dans ledit circuit de circulation 10, dite ici par commodité solution fille.

De préférence, la concentration de la solution mère 22 mise en oeuvre est plusieurs fois supérieure, et par exemple plus de cinq fois supérieure, à la concentration de la solution fille 23, celle-ci étant elle-même supposée suffisante pour satisfaire aux effets recherchés.

Dans la forme de mise en oeuvre illustrée à la fig. 1, il est inséré, suivant un mode particulier de régulation de l'invention, sur le circuit de circulation 10, un réservoir tampon 24, formant capacité de mélange, et c'est par l'intermédiaire de ce réservoir tampon 24 que le circuit de régénération 20 est branché sur le circuit de circulation 10.

De préférence, le reservoir tampon 24 a un volume supérieur à celui du circuit de circulation 10, et par exemple un volume au moins double de celui de ce dernier.

Dans le sens de circulation de la solution fille dans le circuit de circulation 10, repéré par la flèche F sur la fig. 1, le réservoir tampon 24 est en amount de la pompe 12, et donc sur l'aspiration de celle-ci, la cuve 11 étant elle en aval, et donc sur le refoulement de cette pompe 12.

Dans la forme de mise en oeuvre illustrée à la fig. 1, il est en outre inséré, sur le circuit de circulation 10, un spectrophotomètre 25, pour le contrôle de la solution fille 23 présente dans ledit circuit de circulation 10.

La constitution d'un tel spectrophotomètre ne relevant pas de la présente demande, et étant bien connue en soi, elle ne sera pas décrit en détail ici.

Il a été cependant schématiquement indiqué, sur la fig. 1, en 27 la source lumineuse propre à piloter un tel spectrophotomètre, et en 28, la cellule photoélectrique propre à recueillir le rayonnement lumineux le traversant en provenance de ladite source lumineuse 27.

Par exemple, et tel que représenté, la tension recueillie aux bornes de la cellule photoélectrique 28 peut être appliquée à un voltmètre 29, dont un potentiomètre d'entrée 30 permet d'ajuster la lecture.

Par action sur ce potentiomètre 30 il peut par exemple être fait en sorte que, lorsque la concentration de la solution fille 23 en circulation dans le circuit de circulation 10 a une valeur suffisante pour satisfaire aux effets recherchés, l'aiguille du voltmètre 29 soit, comme indiqué sur la fig. 1, entre les limites d'une plage de débattement déterminé.

Pour ce faire, il peut par exemple être procédé au préalable à un étalonnage approprié, à l'aide d'une quelconque cellule de mesure correspondante.

De manière connue en soi, le circuit de régénération 20 mis en oeuvre dans le dispositif suivant l'invention comporte un premier flacon 32, ou flacon principal, qui est propre à contenir de la solution mère 22, tel que représenté, et qui, sous le contrôle des moyens de vannage associés, est reliée, par une canalisation 33, au circuit de circulation 10.

Dans la forme de mise en oeuvre illustrée par la figure 1, ce flacon principal 32 est ainsi relié au circuit de circulation 10 en amont de l'aspiration de la pompe 12, et, en pratique, la canalisation 33 correspondante est reliée au réservoir tampon 24.

Suivant l'invention, le circuit de régénération 20 comporte un deuxième flacon 36, ou flacon auxiliaire, lui-même relié, par une canalisation 37, au circuit de circulation 10.

Dans la forme de mise en oeuvre illustré par la fig. 1, le flacon auxiliaire 36 est ainsi relié au circuit de circulation 10 en aval du refoulement de la pompe 12, et, en pratique, dans cette forme de mise en oeuvre, en aval de la cuve 11.

En outre, dans cette forme de mise en oeuvre, le flacon principal 32 est disposé en partie basse du dispositif, il est relié au flacon auxiliaire 36 par une canalisation 34 dérivée par un té de la canalisation 33, et le flacon auxiliaire, lui-même disposé en partie haute dudit dispositif, forme vase d'expansion.

En pratique, une canalisation 38 relie l'un à l'autre les volumes de tête du flacon principal 32 et du flacon auxiliaire 36.

De préférence, un gaz neutre vis-à-vis de la solution concernée, du néon par exemple, forme l'atmosphère régnant dans l'un et l'autre de ces dits volumes de tête.

De préférence également, le flacon principal 32, et lui seul au moins dans la forme de mise en oeuvre concernée, est interchangeable.

Il comporte donc des ajutages, propres à permettre de le raccorder de manière amovible aux canalisations qu'il dessert, et, plus précisément, d'une part à la canalisation 33, dont dérive la canalisation 34, et d'autre part à la canalisation 38.

Quoi qu'il en soit, il s'agit de préférence d'un flacon opaque au rayonnement, pour épargner un tel rayonnement à la solution mère 22 qu'il contient.

Dans la forme de mise en oeuvre représentée sur la fig. 1, les moyens de vannage associés comportent une première vanne V1, qui est interposée sur le circuit de circulation 10, en aval du raccordement à celui-ci de la canalisation 37 dans cette forme de réalisation, une vanne V2 interposée sur la canalisation 33, en aval du raccordement à celle-ci de la canalisation 34, et une vanne V3 interposée sur cette canalisation 34.

Toutes ces vannes V1, V2, V3 peuvent être des vannes manuelles.

Mais, pour certaines au moins de celle-ci, il peut aussi bien s'agir d'électrovannes.

Par exemple, et tel que schématisé sur la fig. 1, seule la vanne V3 est une vanne manuelle, les vannes V1, V2 étant des électrovannes susceptibles d'être pilotées à partir d'une quelconque source appropriée 40, sous le contrôle d'un bouton-poussoir 41 à la disposition de l'opérateur.

Quoi qu'il en soit, chacune de ces vannes peut, de manière connue en soi, prendre l'un ou l'autre de deux états, l'un, O, ouvert, l'autre, F, fermé.

Elles permettent avantageusement d'effectuer les diverses opérations suivantes:

A: remplissage

B: fin de remplissage

C: circulation de solution fille dans le circuit de circulation 10

D: injection de solution mère dans le circuit de circulation 10

E: vidange du flacon auxiliaire 36

F: vidange générale

suivant la table de vérité ci-après de leurs états respectifs:

|    | A | B | C | D | E | F |
|----|---|---|---|---|---|---|
| V1 | O | O | O | F | F | O |
| V2 | O | F | F | O | F | O |
| V3 | F | F | F | F | O | O |

Bien entendu, le remplissage, qui se fait donc, dans ce cas, vannes V1 et V2 ouvertes et vanne V3 fermée, se fait avec de la solution fille, à une concentration utile, connue par avance, correspondant à celle satisfaisant aux effets recherchés.

Au cours de ce remplissage, il y a un envahissement par cette solution fille tant du circuit de circulation 10, que, après celui-ci, d'une partie au moins du flacon auxiliaire 36.

Compte tenu de la position en partie haute du dispositif de celui-ci, le remplissage total du circuit de circulation 10 est assuré, tout dégazage éventuel ne manquant pas de gagner un tel flacon auxiliaire 36.

Lorsque le remplissage en solution fille est fini, la pompe 12 peut être mise en service, pour entraînement de cette solution fille dans le circuit de circulation 10.

A l'aide du voltmètre 29, l'opérateur contrôle de temps à autre, ou de manière continue, que la concentration de la solution fille 23 en service demeure dans des limites acceptables.

Lorsque cette concentration approche de sa limite inférieure, il assure, par action sur le bouton-poussoir 41, une inversion d'état des vannes V1, V2, propre à assurer une entrée en action du circuit de régénération 20.

Après avoir attendu le temps nécessaire au mélange de la solution mère 22 ainsi injectée dans le circuit de circulation 10, il s'assure, par lecture du voltmètre 29, de la nouvelle concentration de la solution fille 23.

Il lui suffit donc, dès lors, d'agir sur le bouton-poussoir 41 autant de fois qu'il est nécessaire pour que cette concentration revienne dans des limites acceptables pour les effets recherchés.

En variante, une seule action de durée déterminée sur le bouton-poussoir 41 peut suffire, si, expérimentalement, une telle durée d'action a été préalablement étalonnée en conséquence.

Au fur et à mesure que de la solution mère 22 est ainsi injectée dans le circuit de circulation 10, de la solution fille 23 se trouve refoulée vers la flacon auxiliaire 36, avec retour vers le flacon principal 32 par la canalisation 38 de l'atmosphère gazeuse correspondante.

Après épuisement de la solution mère 22, le flacon principale 32 est vidangé, par ouverture de la vanne V3.

L'ouverture des vannes V1, V2 permet ensuite d'assurer une vidange totale du circuit de circulation 10.

Il suffit dès lors de procéder au remplacement du flacon principal 32, pour y substituer un nouveau flacon principal 32 contenant de la solution mère neuve.

Les opérations précédentes peuvent ensuite être renouvelées.

Ainsi qu'on le notera, en toute hypothèse, un seul flacon est à manipuler, à savoir le flacon principal 32.

Ainsi qu'on le notera également, il est possible, avant le remplissage du circuit de circulation 10, de procéder à un balayage par un gaz neutre de ce dernier, pour en éliminer toute présence éventuelle d'oxygène.

Ainsi qu'on le notera, enfin, le dispositif suivant ce mode de réalisation de l'invention permet une étanchéité totale du circuit de circulation 10, aussi bien que du circuit de régénération 20, et il peut dès lors être ainsi avantageusement maintenu sous atmosphère neutre, ce qui est favorable à la conservation de la solution fille en service.

Si désiré, cette atmosphère neutre peut être sous pression.

Dans la forme de mise en oeuvre illustrée à la fig. 3, le circuit de régénération 20 mis en oeuvre comporte, en partie haute, un premier flacon 45, ou flacon principal, qui est propre à contenir de la solution mère 22, et qui, sous le contrôle des moyens de vannage associés, est relié au circuit de circulation 10 de manière à pouvoir laisser s'écouler son contenu par simple gravité dans celui-ci, une canalisation en siphon 46 étant prévue à cet effet, et, en partie basse, un deuxième flacon 47, ou flacon auxiliaire, formant vase de recueil, qui, sous le contrôle desdits moyens de vannage associés, est, par une canalisation 48, relié audit circuit de circulation 10 de manière à pouvoir recueillir par simple gravité tout ou partie du contenu de celui-ci.

En pratique, dans la forme de réalisation représentée, la canalisation 46 est reliée au circuit de circulation 10 en amont du réservoir tampon 24, et la canalisation 48 est reliée à ce circuit de circulation 10 en aval de ce réservoir tampon 24.

En outre, des canalisations 49 et 50 sont conjointement prévues, pour vidange.

Comme précédemment, une canalisation 38 relie les volumes de tête des flacons 45 et 47, pour retour de l'un à l'autre de l'atmosphère neutre prévue dans lesdits volumes de tête.

Enfin, dans cette forme de mise en oeuvre, les moyens de vannage mis en oeuvre peuvent comporter, d'une part une vanne V4, interposée sur la canalisation en siphon 46, et d'autre parte une vanne V5, interposée sur la canalisation de retour 48, des vannes V6 et V7 étant par ailleurs prévues, chacune respectivement, sur les canalisations de vidange 49, 50.

Comme précédemment, les vannes V4, V5 peuvent être très simplement des vannes manuelles, ou, tel que schématisé en traits interrompus sur la fig. 3, des électrovannes dont la mise en oeuvre est sous le contrôle d'un bouton-poussoir 41 à la disposition de l'opérateur.

Comme précédemment également, et tel que schématisé en traits interrompus à la fig. 3, un spectrophotomètre 25 peut également être prévu.

Enfin, suivant un mode particulier de réalisation de l'invention, qui peut d'ailleurs être aussi bien appliqué à la forme de mise en oeuvre illustrée par la fig. 1, les moyens de vannage pilotant l'entrée en action du circuit de régénération 20, au lieu d'être commandés manuellement, comme précédemment, peuvent être commandés automatiquement, sous le contrôle par exemple, tel que schématisé en traits interrompus à la fig. 3, d'une unité de gestion à microprocesseur 51, qui, d'une part, parmi d'autres informations, reçoit la tension de sortie de la cellule photoélectrique 28 associée au spectrophotomètre 25, et qui d'autre part, parmi d'autres voies de sortie, pilote en conséquence lesdits moyens de vannage.

La réalisation pratique d'une telle commande automatique relevant pour l'essentiel de l'homme de l'art, elle ne sera pas décrite en détail ici.

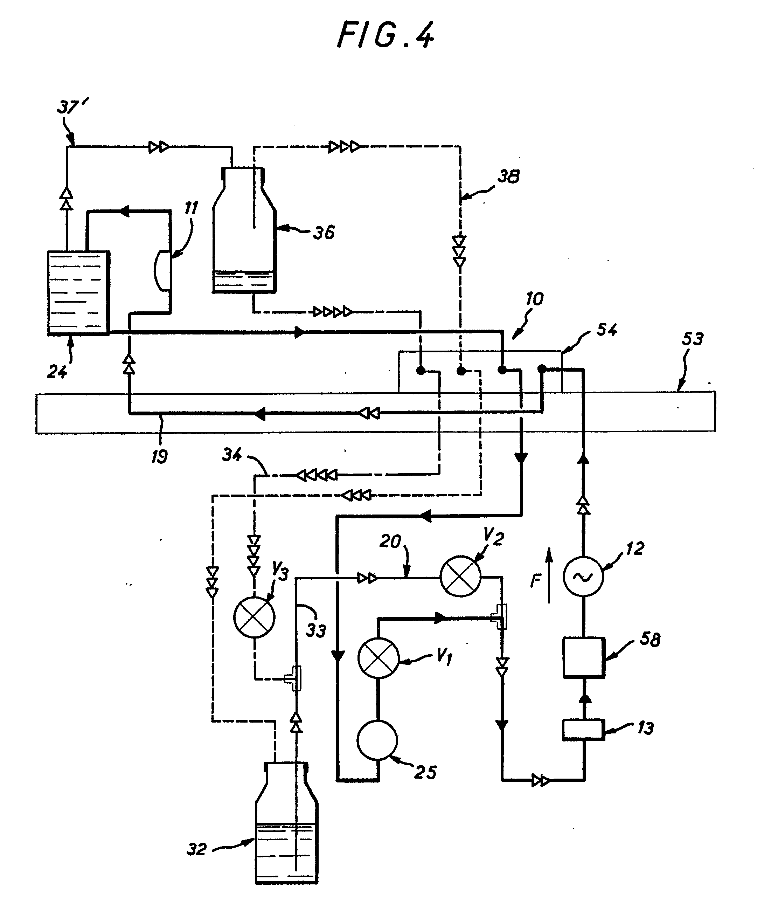

La forme de mise en oeuvre illustrée par la fig. 4 est de même type que celle décrite en référence à la fig. 3, le flacon principal 32 étant en partie basse, et le flacon auxiliaire 36 en partie haute, pour former vase d'expansion.

Les mêmes éléments Y sont donc désignés avec les mêmes références.

S'agissant d'une variante pratique d'exécution, il a été schématisé, sur la fig. 4, en 53 un banc de part et d'autre duquel peut être monté le dispositif suivant l'invention, et en 54 une équerre portée par ce banc 53 pour le raccordement de certaines au moins des canalisations de ce dispositif entre sa partie haute et sa partie basse.

Le banc 53, par lequel transite, sur une portion au moins de sa longueur, commune au circuit de circulation 10 et au circuit de régénération 20, la canalisation 19, est de préférence thermostaté, pour un contrôle de température des solutions en cause.

Sur la fig. 4, sur laquelle ils sont tracés en traits continus, le circuit de circulation 10 se trouve matérialisé par des flèches simples, et le circuit de régénération 20 par des flèches doubles.

De même, sur cette fig. 4 se trouvent tracés, d'une part, en tirets, un circuit de trop-plein constitué en pratique par la canalisation 38 reliant l'une à l'autre les atmosphères du flacon auxiliaire 36 et du flacon principal 32, et matérialisé par des flèches triples, et, d'autre part, en traits interrompus, un circuit de vidange du flacon auxiliaire 36, constitué en pratique par la canalisation 34 contrôlée par la vanne V3, et matérialisé par des flèches quadruples.

Dans la variante pratique d'exécution considérée, le réservoir tampon 24 est disposé sur le refoulement de la pompe 12, en aval de la cuve 11, ce qui est favorable à un bon remplissage de ce réservoir tampon 24, avec possibilité d'évacuation à son niveau de l'air éventuellement présent; par conséquent, la liaison entre le flacon principal 32 et le circuit de circulation 10 ne se fait plus par le réservoir tampon 24, la canalisation 33 correspondante se raccordant simplement par un té à la canalisation 19 constitutive dudit circuit de circulation.

Conjointement, dans cette variante pratique d'exécution, la liaison du flacon auxiliaire 36 avec le circuit de circulation 10 se fait par contre par l'intermédiaire du réservoir tampon 24, une canalisation 37' étant établie à cet effet entre ce réservoir tampon 24 et ce flacon auxiliaire 36, en substitution de la canalisation 37 précédente.

Enfin, dans cette variante pratique d'exécution, les positions relatives de la vanne V1 et du spectrophotomètre 25 dans le sens de circulation de la solution fille dans le circuit de circulation 10 sont inversées l'une par rapport à l'autre, et, sur l'aspiration de la pompe 12, entre le filtre 13 et celle-ci, est interposé un contôleur de débit de type usuel 58.

Pour le reste, cette variante pratique d'exécution est identique à ce qui a été décrit précédemment.

Sa mise un oeuvre en est semblable:

Le remplissage se fait en fermant les vannes V1, V3 et en ouvrant la vanne V2.

La solution mère aspirée par la pompe 12 dans le flacon principal gagne le réservoir tampon 24, et, lorsque celui-ci est rempli, elle se déverse dans le flacon auxiliaire 36.

La vanne V2 est alors fermée, et, tandis que la vanne V3 reste fermée et que la pompe 12 reste en activité, la vanne V1 est ouverte, de façon à purger l'air qui pourrait rester dans la canalisation 19 entre le réservoir tampon 24 et la vanne V1.

Les tables de vérité correspondantes sont donc les suivantes:

|     | A | B |
| --- | --- | --- |
| V1 | F | O |
| V2 | O | F |
| V3 | F | F |

Après plusieurs passages de solution mère dans le circuit de circulation 10, l'air qui se trouvait encore dans les canalisations se retrouve dans le haut du réservoir tampon 24.

Il est alors procédé à sa purge, puis à nouveau à son remplissage, suivant le processus précédent.

Le dispositif est alors prêt à être utilisé, suivant les tables de vérité C, D précédentes.

Lorsque le flacon auxiliaire 36 est plein il peut être procédé à sa vidange suivant la table de verité E précédente, en récupérant par la partie de la canalisation 33 en aval de la vanne V3 la solution fille usagée qui s'en écoule.

Mais, en fonctionnement, il peut arriver que le flacon auxiliaire 36 étant plein, la solution fille usagée qu'il contient refoule dans le flacon principal 32 par la canalisation 38, celle-ci faisant office de circuit de trop-plein de sécurité.

Dès lors, malgré la mise en oeuvre du circuit de régénération, la concentration de la solution fille contrôlée par le spectrophotomètre 25, ne remonte pas et il faut procéder à une vidange générale du dispositif.

Dans un premier temps, pour vidange du réservoir tampon 24 et du spectrophotomètre 25, la cuve 11 est débranchée du dit réservoir tampon 24, et, après obturation des tronçons de la liaison ainsi interrompue, les vannes V1 et V2 sont ouvertes, cependant que la vanne V3 est laissée fermée.

Un gaz neutre est alors amené à balayer le dispositif, par exemple par la canalisation 38.

Dans un deuxième temps, la cuve 11 est rebranchée sur le réservoir tampon 24 et, les vannes V1, V3 étant fermées et la vanne V2 ouverte, il est procédé à la vidange de la cuve 11, de la pompe 12, du contrôleur de débit 58 et du filtre 13, avant un nouveau balayage du dispositif par un gaz neutre.

Les tables de vérité correspondantes sont les suivantes:

|     | $F_1$ | $F_2$ |
| --- | --- | --- |
| V1 | O | F |
| V2 | O | O |
| V3 | F | F |

Dans un troisième temps, il est procédé à la vidange du réservoir auxiliaire 36, suivant la table de vérité E.

## Revendications

1. Dispositif propre à la mise en oeuvre d'une solution dégradable d'un quelconque produit par exemple d'un absorbant saturable, en particulier pour laser, du genre comportant, d'une part, un premier circuit (10), dit ici par commodité circuit de circulation, sur lequel se trouvent notamment en série une cuve (11), propre à contenir ladite solution, et une pompe (12), propre à l'entraînement de celle-ci, et d'autre part, branché en un point du circuit de circulation (10), un deuxième circuit (20), qui est propre à permettre, sous la commande de moyens de vannage, l'injection, dans le circuit de circulation (10), d'une solution (22) dudit produit, dite ici par commodité solution mère, de concentration supérieure à celle de la solution (23) présente dans ledit circuit de circulation (10), dite ici par commodité solution fille, et qui comporte à cet effet un flacon (32, 45), ou flacon principal, propre à contenir de la solution mère (22), et susceptible d'être relié au circuit de circulation (10) sous le contrôle desdits moyens de vannage, caractérisé en ce que le deuxième circuit (20) comporte un deuxième flacon (36, 47), ou flacon auxiliaire, formant vase d'expansion ou vase de recueil, et relié lui-même audit circuit de circulation (10), en sorte qu'il constitue un circuit de régénération.

2. Dispositif suivant la revendication 1, caractérisé en ce que le flacon principal (32) est relié au circuit de circulation (10) en amont de l'aspiration de la pompe (12), et le flacon auxiliaire (36) en aval du refoulement de celle-ci.

3. Dispositif suivant la revendication 2, caractérisé en ce que le flacon principal (32) est disposé en partie basse, et le flacon auxiliaire (36), formant vase d'expansion, en partie haute.

4. Dispositif suivant l'une quelconque des revendications 1 à 3, caractérisé en ce que le flacon principal (32) est également relié au flacon auxiliaire (36) sous le contrôle de moyens de vannage.

5. Dispositif suivant la revendication 1, caractérisé en ce que le flacon principal (45) est en partie haute, de manière à pouvoir laisser s'écouler son contenu par simple gravité dans le circuit de circulation (10), et le flacon auxiliaire (47), formant vase de recueil, est en partie basse, de manière à pouvoir recueillir par simple gravité le contenu du celui-ci.

6. Dispositif suivant l'une quelconque des revendications 1 à 5, caractérisé en ce qu'une canalisation (38) relie l'une à l'autre les volumes de tête du flacon principal (32, 45) et du flacon auxiliaire (36, 47).

7. Dispositif suivant l'une quelconque des revendications 1 à 6, caractérisé en ce qu'il est inséré sur le circuit de circulation (10) un réservoir tampon (24), formant capacité de mélange, de volume supérieur à celui dudit circuit de circulation (10), et, par exemple de volume au moins double de celui de ce dernier.

8. Dispositif suivant les revendications 3 et 7, prises conjointement, caractérisé en ce que c'est par l'intermédiaire du réservoir tampon (24), que le circuit de régénération (20) est branché sur le circuit de circulation (10), le flacon principale (32) étant relié audit réservoir tampon (24) sous le contrôle de moyens de vannage.

9. Dispositif suivant les revendications 3 et 7, prises conjointement, caractérisé en ce que c'est par l'intermédiaire du réservoir tampon (24) que le flacon auxiliaire (36) est relié au circuit de circulation (10).

10. Dispositif suivant l'une quelconque des revendications 7 à 9, caractérisé en ce que le réservoir tampon est disposé sur le refoulement de la pompe (12), en aval de la cuve (11).

11. Dispositif suivant l'une quelconque des revendications 1 à 10, caractérisé en ce qu'il est inséré sur le circuit de circulation (10) un spectrophotomètre (25), pour le contrôle de la solution fille (23) présente dans ledit circuit de circulation (10).

## Patentansprüche

1. Vorrichtung zum Arbeiten mit einer abbaubaren Lösung, z.B. einem sättigbaren Absorber, insbesondere für einen Laser, mit einem ersten Kreislauf (10), im folgenden Zirkulationskreislauf genannt, in welchem insbesondere in Reihe eine Küvette (11) zur Aufnahme der Lösung und eine Pumpe (12) zum Transport der Lösung und, abgezweigt an einem Punkt des Zirkulationskreislaufes (10), ein zweiter Kreislauf (20) angeordnet sind, mit welchem durch Steuerung einer Ablasseinrichtung die Einspritzung einer Lösung (22), im folgenden genannt Mutterlösung, in den Zirkulationskreislauf (10) möglich ist, wobei die Mutterlösung eine Konzentration aufweist, die höher ist als die der Lösung (23), die in dem Zirkulationskreislauf vorhanden ist und die im folgenden Tochterlösung genannt wird, wobei dafür ein Flakon oder Kolben oder Hauptflakon (32, 45) vorgesehen ist zur Aufnahme der Mutterlösung (22), der mit dem Zirkulationskreislauf (10) durch Steuerung der Ablasseinrichtung verbindbar ist, dadurch gekennzeichnet, dass der zweite Kreislauf (20) einen zweiten Flakon oder Kolben oder Hilfsflakon (36, 47) aufweist, der ein Ausdehnungs- oder Sammelgefäss bildet und der selbst mit dem Zirkulationskreislauf (10) verbunden ist, so dass er einen Regenerationskreislauf bildet.

2. Vorrichtung nach Anspruch 1, dadurch gekennzeichnet, dass der Hauptflakon (32) stromaufwärts der Ansaugseite der Pumpe (12) und der Hilfsflakon (36) stromabwärts der Förderseite der Pumpe angeordnet sind.

3. Vorrichtung nach Anspruch 2, dadurch gekennzeichnet, dass der Hauptflakon (32) im unteren Teil und der Hilfsflakon (36), der das Ausdehnungsgefäss bildet, im oberen Teil angeordnet sind.

4. Vorrichtung nach einem der Ansprüche 1 bis 3, dadurch gekennzeichnet, dass der Hauptflakon (32) auch mit dem Hilfsflakon (36) durch Steuerung der Ablasseinrichtung verbunden ist.

5. Vorrichtung nach Anspruch 1, dadurch gekennzeichnet, dass der Hauptflakon (45) im oberen Teil derart angeordnet ist, dass er seinen Inhalt einfach durch Schwerkraft in den Zirkulationskreislauf (10) ausfliessen lassen kann, und dass der Hilfsflakon (47), der das Sammelgefäss bildet, im unteren Teil angeordnet ist, derart, dass er seinen Inhalt einfach durch Schwerkraft ansammeln kann.

6. Vorrichtung nach einem der Anprüche 1-5, dadurch gekennzeichnet, dass eine Leitung (48) den Kopfraum des Hauptflakons (32, 45) und den Kopfraum des Hilfsflakons (36, 47) miteinander verbindet.

7. Vorrichtung nach einem der Ansprüche 1-6, dadurch gekennzeichnet, dass in dem Zirkulationskreislauf (10) ein Pufferspeicher (24) angeordnet ist, der einen Mischraum bildet mit einem Volumen, das grösser ist als das des Zirkulationskreislaufes (10) und beispielsweise mit einem Volumen, das wenigstens doppelt so gross ist wie das des Kreislaufes (10).

8. Vorrichtung nach den Ansprüchen 3 und 7, dadurch gekennzeichnet, dass der Regenerationskreislauf (20) unter Zwischenschaltung des Pufferspeichers (24) von dem Zirkulationskreislauf (10) abzweigt, und dass der Hauptflakon (32) mit dem Pufferspeicher (24) durch Steuerung der Ablasseinrichtung verbunden ist.

9. Vorrichtung nach Anspruch 3 und 7, dadurch gekennzeichnet, dass der Hilfsflakon (36) unter Zwischenschaltung des Pufferspeichers (24) mit dem Zirkulationskreislauf (10) verbunden ist.

10. Vorrichtung nach einem der Ansprüche 7 bis 9, dadurch gekennzeichnet, dass der Pufferspeicher stromabwärts der Pumpe (12) und stromaufwärts der Küvette (11) angeordnet ist.

11. Vorrichtung nach einem der Ansprüche 1 bis 10, dadurch gekennzeichnet, dass in dem Zirkulationskreislauf 10 ein Spektrophotometer (25) angeordnet ist, um die Tochterlösung (23) in dem Zirkulationskreislauf (10) zu überwachen.

## Claims

1. Apparatus suitable for the utilisation of a degradable solution of any product for example of a saturable absorbent, in particular for a laser, of the kind comprising, on the one hand, a first circuit (10), herein referred to for convenience as a circulation circuit, in which there are disposed more especially in series a cell (11), suitable to contain the said solution, and a pump (12), suitable to circulate the latter, and on the other hand, connected at a point on the circulation circuit (10), a second circuit (20), which is suitable to permit, under the control of valve regulating means, the injection into the circulation circuit (10) of a solution (22) of the said product, the said solution being herein referred to for convenience as the mother solution, having a concentration greater than that of the solution (23) present in the said circulation circuit (10), the last-mentioned solution being herein referred to for convenience as the daughter solution, and which comprises for this purpose a bottle (32, 45), or principal bottle, suitable to contain the mother solution (22), and capable of being connected to the circulation circuit (10) under the control of the said valve regulation means, characterised in that the second circuit (20) comprises a second bottle (36, 47), or auxiliary bottle, forming an expansion vessel or collection vessel, and is itself connected to the circulation circuit (10), in such a manner that it constitutes a regeneration circuit.

2. Apparatus according to claim 1, characterised in that the principal bottle (32) is connected to the circulation circuit (10) upstream of the intake of the pump (12), and the auxiliary bottle (36) downstream of the back flow of the latter.

3. Apparatus according to claim 2, characterised in that the principal bottle (32) is disposed in the lower part, and the auxiliary bottle (36), forming an expansion vessel, in the upper part.

4. Apparatus according to any one of claims 1 to 3, characterised in that the principal bottle (32) is likewise connected to the auxiliary bottle (36) under the control of valve regulating means.

5. Apparatus according to claim 1, characterised in that the principal bottle (45) is in the upper part, in such a manner as to be able to allow the contents thereof to flow out simply by gravity into the circulation circuit (10), and the auxiliary bottle (47), forming a collection vessel, is in the lower part, in such a manner as to be able to collect the contents of the latter simply by gravity.

6. Apparatus according to any one of claims 1 to 5, characterised in that a pipe (38) connects the head volumes of the principal bottle (32, 45) and of the auxiliary bottle (36, 47) to one another.

7. Apparatus according to any one of claims 1 to 6, characterised in that there is inserted in the circulation circuit (10) a buffer reservoir (24), forming a mixing capacity, having a volume greater than that of the said circulation circuit (10), and, for exemple having a volume of at least twice that of the latter.

8. Apparatus according to claims 3 and 7, taken jointly, characterised in that it is by way of the buffer reservoir (24), that the regeneration circuit (20) is connected to the circulation circuit (10), the principal bottle (32) being connected to the said buffer reservoir (24) under the control of valve regulating means.

9. Apparatus according to claims 3 and 7, taken jointly, characterised in that it is by way of the buffer reservoir (24) that the auxiliary bottle (36) is connected to the circulation circuit (10).

10. Apparatus according to any one of claims 7 to 9, characterised in that the buffer reservoir is disposed in the back flow of the pump (12), downstream of the cell (11).

11. Apparatus according to any one of claims 1 to 10, characterised in that there is inserted in the circulation circuit (10) a spectrophotometer (25), for the control of the daughter solution (23) present in the said circulation circuit (10).

# FIG.1

# FIG.2

# FIG.3

# FIG.4